# EUROPEAN PATENT APPLICATION

(11) **EP 4 779 895 A2**
(43) Date of publication of application: **22.07.2026**
(21) Application number: 26164493.4
(22) Date of filing: 06.09.2012
(51) Int. Cl.: H04B 7/06

(54) **METHOD, DEVICE AND SYSTEM FOR SETTING A WEIGHT FEEDBACK GRANULARITY**

(30) Priority: 14.09.2011 CN 201110271836
(62) Divisional of application: 21195139.7
(71) Applicant: HUAWEI TECHNOLOGIES CO., LTD., Shenzhen 518129 (CN)
(72) Inventor: LIU, Menghong, Shenzhen, 518129 (CN); WANG, Xuehuan, Shenzhen, 518129 (CN); LUO, Long, Shenzhen, 518129 (CN)
(74) Representative: Isarpatent

(57) **Abstract**

Provided in the embodiments of the present invention are a method, a device and a system for setting a weight feedback granularity, relating to communication technologies, which solve the problem that a beamformer can not control a beamforming weight feedback granularity. The method comprises: receiving a null data packet announcement (NDPA) frame comprising a weight feedback granularity requirement value transmitted by the beamformer; receiving a null data packet (NDP) frame transmitted by the beamformer, and measuring the beamforming weight by using the weight feedback granularity requirement value as a granularity; and transmitting a very high throughput compressed beamforming (VCBF) frame to the beamformer, wherein the very high throughput compressed beamforming (VCBF) frame comprises the beamforming weight using the weight feedback granularity requirement value as the granularity. The embodiments of the present inventions are suitable for setting a weight feedback granularity.

## Description

This application claims priority to Chinese Patent Application No. 201110271836.1, filed with Chinese Patent Office on September 14, 2011, and entitled "METHOD, DEVICE AND SYSTEM FOR SETTING A WEIGHT FEEDBACK GRANULARITY", which is incorporated herein by reference in its entirety.

### FIELD OF TECHNOLOGY

The present invention relates to communication technologies, and particularly to a method, a device and a system for setting a weight feedback granularity.

### BACKGROUND

A beamforming technology is a multi-antenna transmission technology using an antenna array with a small spacing, in which, a strong correlation of spatial channels and a principle of wave interference are mainly utilized, and an antenna beam is made to adaptively point in a direction of a user by adjusting a weighted value of each array element of an array antenna, thereby focusing emitted energy in an area which the user is in, and further increasing received signal energy over a communication link.

Provided in the prior art is a method for setting a weight feedback granularity. A specific scheme is described as follows:
a beamformer transmits a NDPA (Null Data Packet Announcement, null data packet announcement ) frame to a beamformee to inform the beamformee to prepare sounding measurement;
after an interval of a SIFS (Short Inter-Frame Space, short inter-frame space), the beamformer transmits a NDP (Null Data Packet, null data packet) frame to the beamformee, for performing sounding (sounding) measurement by the beamformee;
the beamformer transmits a BFRP (Beamforming Report Poll, beamforming report poll ) frame to the beamformee, to require the beamformee to transmit sounding measurement information such as a beamforming weight and the like;
the beamformee transmits a VCBF (Very high throughput Compressed Beamforming, very high throughput compressed beamforming) frame including the sounding measurement information such as a weight, a weight granularity and the like to the beamformer.

Since only the beamformer can know channel state of each beamformee, therefore, if the beamformer controls a weight feedback granularity of the beamformee, when the beamformer performs multi-user beamforming transmission, multi-user grouping management and pairing management can be conveniently performed, which comprises null shunt distribution, pairing weight, pairing gain estimation and the like, and the cost can be reduced, such as the management cost, sounding overhead and the like, and the performance of multiple users can also be ensured to a certain extent. Moreover, the size and the duration of a feedback frame can be determined by the weight feedback granularity, and the beamformer can control time by adjusting the weight feedback granularity, in a case that the duration of a transmission chance acquired by the beamformer is insufficient.

However, in the existing scheme, the weight feedback granularity is fed back to the beamformee through the VCBF transmitted by the beamformee, therefore the weight feedback granularity is completely controlled by the beamformee, and the weight feedback granularity for beamforming can not be controlled by the beamformer.

### SUMMARY

Provided in embodiments of the present invention are a method, a device and a system for setting a weight feedback granularity, to solve the problem that a beamformer can not control the beamforming weight feedback granularity.

In order to achieve the above objective, the following technical solutions are employed in the embodiments of the present invention:
in an aspect, provided is a method for setting a weight feedback granularity, comprising:
receiving a null data packet announcement (NDPA) frame comprising a weight feedback granularity requirement value transmitted by a beamformer;
receiving a null data packet (NDP) frame transmitted by the beamformer, measuring a beamforming weight with a granularity according to the weight feedback granularity requirement value, and transmitting a very high throughput compressed beamforming (VCBF) frame to the beamformer, wherein the VCBF frame comprises the beamforming weight with the granularity which corresponds to the weight feedback granularity requirement value.

In an aspect, provided is a method for setting a weight feedback granularity, comprising:
receiving a beamforming report poll frame (BRPF) comprising a weight feedback granularity requirement value transmitted by a beamformer;
transmitting a very high throughput compressed beamforming (VCBF) frame to the beamformer, wherein the VCBF frame comprises a beamforming weight with a granularity according to the weight feedback granularity requirement value.

In an aspect, provided is a method for setting a weight feedback granularity, comprising:
receiving capability interaction information comprising a weight feedback granularity requirement value transmitted by a beamformer;
receiving a null data packet (NDP) frame transmitted by the beamformer, measuring a beamforming weight with a granularity according to the weight feedback granularity requirement value, and transmitting a very high throughput compressed beamforming (VCBF) frame to the beamformer, wherein the VCBF frame comprises the beamforming weight with the granularity which corresponds to the weight feedback granularity requirement value.

In an aspect, provided is a method for setting a weight feedback granularity, comprising:
transmitting a weight feedback granularity requirement value to a beamformee;
receiving a beamforming weight with a granularity according to the weight feedback granularity requirement value, which is returned by the beamformee.

In an aspect, provided is a beamformee device, comprising:
a null data packet announcement frame receiving unit, configured to receive a null data packet announcement (NDPA) frame transmitted by a beamformer, and the NDPA comprising a weight feedback granularity requirement value;
a first weight feedback transmitting unit, configured to transmit a very high throughput compressed beamforming (VCBF) frame to the beamformer, after receiving a null data packet (NDP) frame transmitted by the beamformer and measuring a beamforming weight by using the weight feedback granularity requirement value as a granularity, wherein the very high throughput compressed beamforming (VCBF) frame comprises the beamforming weight using the weight feedback granularity requirement value as the granularity.

In an aspect, provided is a beamformee device, comprising:
a beamforming report poll frame receiving unit, configured to receive a beamforming report poll frame (BRPF) comprising a weight feedback granularity requirement value transmitted by a beamformer;
a second weight feedback transmitting unit, configured to transmit a very high throughput compressed beamforming (VCBF) frame to the beamformer, wherein the VCBF frame comprises a beamforming weight with a granularity which corresponds to the weight feedback granularity requirement value.

In an aspect, provided is a beamformee device, comprising:
a capability information interacting unit, configured to receive capability interaction information comprising a weight feedback granularity requirement value transmitted by a beamformer;
a third weight feedback transmitting unit, configured to transmit a very high throughput compressed beamforming (VCBF) frame to the beamformer, after receiving a null data packet (NDP) frame transmitted by the beamformer and measuring a beamforming weight by using the weight feedback granularity requirement value as a granularity, wherein the very high throughput compressed beamforming (VCBF) frame comprises the beamforming weight using the weight feedback granularity requirement value as the granularity.

In an aspect, provided is a beamformer device, comprising:
a weight feedback granularity requirement value transmitting unit, configured to transmit a weight feedback granularity requirement value to a beamformee;
a weight receiving unit, configured to receive a beamforming weight returned by the beamformee.

In an aspect, provided is a system for setting a weight feedback granularity, comprising:
a beamformer device, configured to transmit a weight feedback granularity requirement value to a beamformee through a null data packet announcement (NDPA) frame; or
to transmit a weight feedback granularity requirement value to a beamformee through a beamforming report poll frame (BRPF); or
to transmit a weight feedback granularity requirement value to a beamformee through very high throughput capability information (VCIF);
a beamformee device, configured to receive the weight feedback granularity requirement value transmitted by the beamformer, and to return a beamforming weight using the weight feedback granularity requirement value as a granularity through a very high throughput compressed beamforming (VCBF) frame;
wherein the beamformer device is further configured to receive the beamforming weight returned by the beamformee device.

The embodiments of the present invention provide a method, a device and a system for setting a weight feedback granularity, provided in, wherein, the beamformee receives a NDPA frame comprising a weight feedback granularity requirement value transmitted by the beamformer, and transmits a very high throughput compressed beamforming (VCBF) frame to the beamformer after receiving a null data packet (NDP) frame transmitted by the beamformer and measuring a beamforming weight by using the weight feedback granularity requirement value as a granularity,, wherein the very high throughput compressed beamforming (VCBF) frame comprises the beamforming weight using the weight feedback granularity requirement value as the granularity. Thus, the beamformer is enabled to control the weight feedback granularity, thereby better managing users.

### BRIEF DESCRIPTION OF DRAWINGS

In order to illustrate technical solutions in the embodiments of the present invention or in the prior art more clearly, brief description will be made below to the accompanying drawings required in the embodiments of the present invention or the prior art, and apparently, the accompanying drawings described below are only some embodiments of the present invention, and other accompanying drawings can be obtained by those skilled in the art without inventive efforts based on these drawings.
Fig. 1 is a schematic flowchart of a method for setting a weight feedback granularity provided by embodiment I of the present invention;
Fig. 2 is a schematic flowchart of another method for setting a weight feedback granularity provided by embodiment I of the present invention;
Fig. 3 is a schematic flowchart of another method for setting a weight feedback granularity provided by embodiment I of the present invention;
Fig. 4 is a schematic flowchart of still another method for setting a weight feedback granularity provided by embodiment I of the present invention;
Fig. 5 is a part of a schematic diagram of a method for setting a weight feedback granularity provided by embodiment II of the present invention;
Fig. 6 is a part of a schematic diagram of another method for setting a weight feedback granularity provided by embodiment III of the present invention;
Fig. 7 is a part of a schematic diagram of another method for setting a weight feedback granularity provided by embodiment IV of the present invention;
Fig. 8 is a block diagram of a beamformee device provided by embodiment V of the present invention;
Fig. 9 is a block diagram of another beamformee device provided by embodiment V of the present invention;
Fig. 10 is a block diagram of another beamformee device provided by embodiment V of the present invention;
Fig. 11 is a block diagram of a beamformer device provided by embodiment V of the present invention;
Fig. 12 is a block diagram of another beamformer device provided by embodiment V of the present invention;
Fig. 13 is a schematic diagram of a system for setting a weight feedback granularity provided by embodiment V of the present invention.

### DESCRIPTION OF EMBODIMENTS

A clear and complete description of technical solutions of the embodiments of the present invention will be given below, in conjunction with the accompanying drawings in the embodiments of the present invention, and apparently, the embodiments described below are only a part, but not all, of the embodiments of the present invention. All of other embodiments, obtained by those skilled in the art based on the embodiments of the present invention without any inventive efforts, fall into the protection scope of the present invention.

### Embodiment I

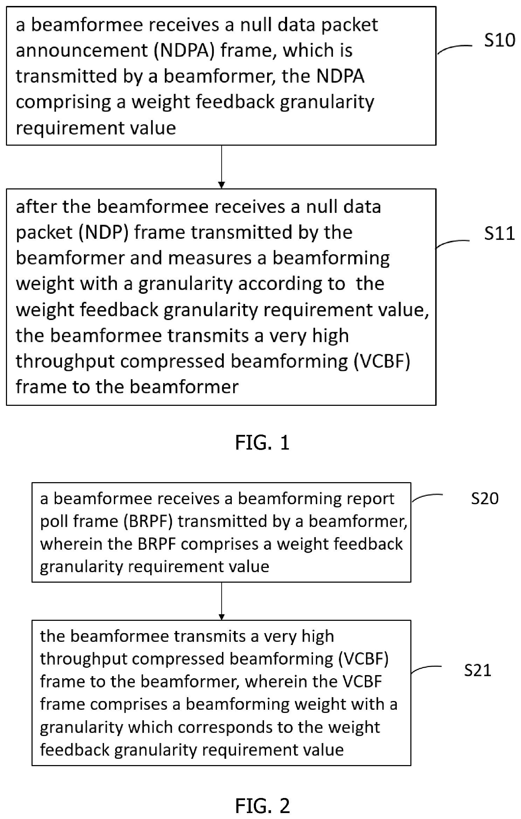

Provided in an embodiment of the present invention is a method for setting a weight feedback granularity. As shown in Fig. 1, the specific steps include:
S10, a beamformee receives a null data packet announcement (NDPA) frame, which is transmitted by a beamformer, the NDPA comprising a weight feedback granularity requirement value.

Wherein, the NDPA is used for informing the beamformee to prepare sounding measurement.

S11, after the beamformee receives a null data packet (NDP) frame transmitted by the beamformer and measures a beamforming weight with a granularity according to the weight feedback granularity requirement value, the beamformee transmits a very high throughput compressed beamforming (VCBF) frame to the beamformer.

The very high throughput compressed beamforming (VCBF) frame comprises the beamforming weight with the granularity which corresponds to the weight feedback granularity requirement value.

The embodiment of the present invention provides a method for setting a weight feedback granularity, wherein the beamformee receives a null data packet announcement (NDPA) frame comprising a weight feedback granularity requirement value transmitted by the beamformer, and transmits a very high throughput compressed beamforming (VCBF) frame to the beamformer, after receiving a null data packet (NDP) frame transmitted by the beamformer and measuring a beamforming weight with a granularity according to the weight feedback granularity requirement value, wherein the very high throughput compressed beamforming (VCBF) frame comprises the beamforming weight with the granularity which corresponds to the weight feedback granularity requirement value. Thus, the beamformer is enabled to control the weight feedback granularity, thereby it can manage users better.

Provided in an embodiment of the present invention is another method for setting a weight feedback granularity. As shown in Fig. 2, the following steps are comprised:
S20, a beamformee receives a beamforming report poll frame (BRPF) transmitted by a beamformer, wherein the BRPF comprises a weight feedback granularity requirement value;
S21, the beamformee transmits a very high throughput compressed beamforming (VCBF) frame to the beamformer, wherein the very high throughput compressed beamforming (VCBF) frame comprises a beamforming weight with a granularity which corresponds to the weight feedback granularity requirement value.

Wherein, the BRPF is used for requiring the beamformee to feed back the very high throughput compressed beamforming (VCBF) frame.

The embodiment of the present invention provides a method for setting weight feedback granularity, wherein, the beamformee receives a beamforming report poll frame (BRPF) comprising a weight feedback granularity requirement value transmitted by the beamformer, and transmits a very high throughput compressed beamforming (VCBF) frame to the beamformer after the beamformee receives the BRPF, wherein the very high throughput compressed beamforming (VCBF) frame comprises the beamforming weight with the granularity which corresponds to the weight feedback granularity requirement value. Thus, the beamformer is enabled to control the weight feedback granularity, thereby it can manage users better .

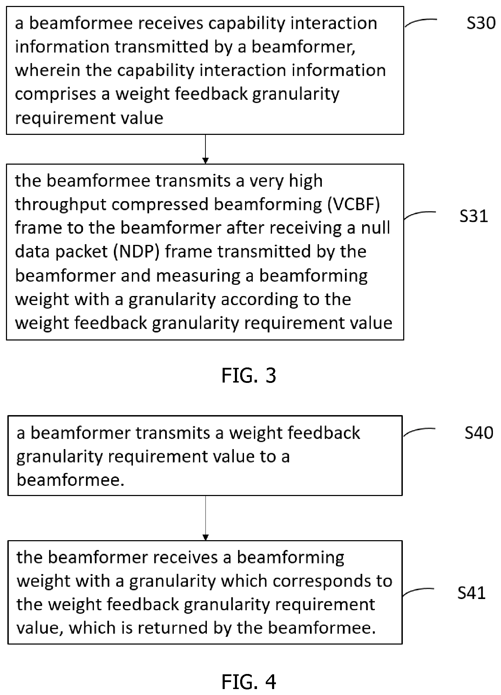

Moreover, also provided in an embodiment of the present invention is a method for setting a weight feedback granularity. As shown in Fig. 3, the following steps are comprised:
S30, a beamformee receives capability interaction information transmitted by a beamformer, wherein the capability interaction information comprises a weight feedback granularity requirement value.
wherein, very high throughput capability information (VCIF) comprised in the capability interaction information is carried in a capability interaction process between the beamformee and the beamformer. The capability interaction process comprises an association process, a re-association process, a start process, a probe process, a beacon frame transmitting process or the like.
S31, the beamformee transmits a very high throughput compressed beamforming (VCBF) frame to the beamformer after receiving a null data packet (NDP) frame transmitted by the beamformer and measuring a beamforming weight with a granularity according to the weight feedback granularity requirement value.

The very high throughput compressed beamforming (VCBF) frame comprises the beamforming weight with the granularity which corresponds to the weight feedback granularity requirement value .

The embodiment of the present invention provides a method for setting a weight feedback granularity, wherein, the beamformee receives capability interaction information transmitted by the beamformer, which comprising a weight feedback granularity requirement value , and transmits a very high throughput compressed beamforming (VCBF) frame to the beamformer after the beamformee receives a null data packet (NDP) frame transmitted by the beamformer and measures a beamforming weight with a granularity according to the weight feedback granularity requirement value, wherein the very high throughput compressed beamforming (VCBF) frame comprises the beamforming weight with the granularity which corresponds to the weight feedback granularity requirement value. Thus, the beamformer is enabled to control the weight feedback granularity, thereby better managing users.

In another aspect, provided in an embodiment of the present invention is a method for setting a weight feedback granularity. The method is a method on the side of a beamformer. As shown in Fig. 4, the following steps are comprised:
S40, a beamformer transmits a weight feedback granularity requirement value to a beamformee.
S41, the beamformer receives a beamforming weight with a granularity which corresponds to the weight feedback granularity requirement value, which is returned by the beamformee.

Wherein, wherein the weight feedback granularity requirement value may be transmitted to the beamformee through a null data packet announcement (NDPA) frame; or
the weight feedback granularity requirement value is transmitted to the beamformee through a beamforming report poll frame (BRPF); or
the weight feedback granularity requirement value is transmitted to the beamformee through very high throughput capability information (VCIF).

The embodiment of the present invention provides a method for setting a weight feedback granularity, wherein, the beamformer transmits a weight feedback granularity requirement value to the beamformee, and the beamformer receives a beamforming weight with a granularity which corresponds to the weight feedback granularity requirement value, which is returned by the beamformee. Thus, the beamformer is enabled to control the weight feedback granularity, thereby better managing users.

### Embodiment II

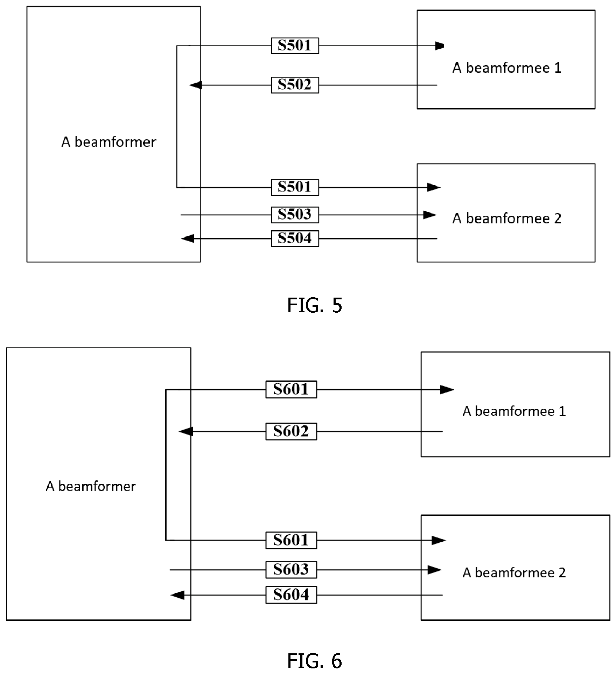

Provided in an embodiment of the present invention is a method for setting a weight feedback granularity. As shown in Fig. 5, a specific embodiment comprises the following steps:
S500, a beamformer transmits a NDPA comprising weight feedback granularity requirement values, and beamformees receive the NDPA comprising the weight feedback granularity requirement values.

In a multi-user scenario, station information of the NDPA comprises at least two pieces of station information, Station information 1 and Station information 2 are taken as examples for description in the embodiment of the present invention, but not limited to this.

Wherein, a format of the NDPA is shown in table 1 below:

**Table 1**

| Information | Size (byte) | Note |
|---|---|---|
| Frame Control | 2 | |
| Duration | 2 | |
| RA | 6 | |
| TA | 6 | |
| Sounding Sequence | 1 | |
| Station Information 1 | 2 | |
| Station Information 2 | 2 | |
| FCS | 4 | |

A format of the sounding sequence in the NDPA is shown in table 2 below:

**Table 2**

| Information | Size (bit) | Note |
|---|---|---|
| Reserved Field | 2 | |
| Sequence Number | 6 | |

A structure of the station information field in the NDPA is shown in table 3 below:

**Table 3**

| Information | Size (bit) | Note |
|---|---|---|
| Association Identifier | 12 | identifying station information |
| Feedback Type | 1 | if the feedback type is 0, a single user is indicated; |
| | | if the feedback type is 1, multiple users are indicated. |
| Nc Index | 3 | if the feedback type is 1, a required feedback dimension is indicated ; |
| | | if the feedback type is 0, field reservation is indicated. |

The weight feedback granularity requirement value may be set in the reserved information field in the sounding sequence field of the NDPA, as shown in table 4 below:

**Table 4**

| Information | Size (bit) | Note |
|---|---|---|
| Weight Feedback Granularity Requirement Value | 2 | the reserved field indicates the weight feedback granularity requirement value |
| Sequence Number | 6 | |

The weight feedback granularity requirement value may also be set in a newly added weight feedback granularity request field in the NDPA, as shown in table 5,

**Table 5**

| Information | Size (byte) | Note |
|---|---|---|
| Frame Control | 2 | |
| Duration | 2 | |
| RA | 6 | |
| TA | 6 | |
| Sounding Sequence | 1 | |
| Weight Feedback Granularity Request Field | 1 | a newly added weight feedback granularity request field |
| Station Information 1 | 2 | |
| Station Information 2 | 2 | |
| FCS | 4 | |

A structure of the weight feedback granularity request field is shown in table 6 below:

**Table 6**

| Information | Size (bit) | Note |
|---|---|---|
| Weight Feedback Granularity Requirement Value | 2 | |
| Reserved Field | 6 | |

A newly added weight feedback granularity request field is totally 8 bits, wherein any 2 bits may be used for indicating the weight feedback granularity requirement value.

A newly added weight feedback granularity request field may be set after the sounding sequence field, and may also be set before the sounding sequence field. The embodiment of the present invention set no limitation to it.

Moreover, a weight feedback granularity requirement value may also be set in the reserved information field of the station information in the NDPA, wherein,
if the feedback type of the station information is 0, any 1 bit of the12 bits of the association identifier may be reserved, and all of the 3 bits of the Nc index are reserved. Therefore, a total of 4 bits are reserved, and the weight feedback granularity requirement value is indicated by any 2 bits of the 4 bits;
if the feedback type of the station information is 1, any 1 bit of the 12 bits of the association identifier may be reserved, and any 1 bit of the 3 bits of the Nc index is reserved, and the weight feedback granularity requirement value is indicated by the 2 bits.

In addition, the weight feedback granularity requirement value may also be set in a newly added weight feedback granularity request field of a station information of the NDPA. A structure of a station information field in which the weight feedback granularity request field is set is shown in table 7.

**Table 7**

| Information | Size (bit) | Note |
|---|---|---|
| Association Identifier | 12 | identifying station information |
| Feedback Type | 1 | if the feedback type is 0, a single user is indicated; |
| | | if the feedback type is 1, multiple users are indicated. |
| Nc Index | 3 | if the feedback type is 1, a required feedback dimension is indicated; |
| | | if the feedback type is 0, field reservation is indicated. |
| Weight Feedback Granularity Request Field | 8 | a newly added weight feedback granularity request field |

A structure of the weight feedback granularity request field is shown in above table 6.

A newly added weight feedback granularity request field may be totally 8 bits, wherein any 2 bits may be used for indicating the weight feedback granularity requirement value.

A newly added weight feedback granularity request field may be set at the head of or at the tail of the station information field, and may also be set at any position of the association indentifier, the feedback type and the Nc index in the station information.

For example, the weight feedback granularity requirement value field mentioned above may be set as 2 bits, and a corresponding value range is {0, 1, 2, 3}, wherein three values correspond to the weight feedback granularities 1, 2 and 4 respectively, and a remaining value is reserved or indicates no requirement for the feedback weight granularity of the beamformee, e.g., 0 indicates that the feedback weight granularity is 1, 1 indicates that the feedback weight granularity is 2, 2 indicates the feedback weight granularity is 4, and 3 is reserved or indicates no requirement for the feedback weight granularity of the beamformee.

S501, After an interval of a SIFS, the beamformer transmits a NDP, and the beamformees receive the NDP and measure a beamforming weights with granularities according to the weight feedback granularity requirement values.

S502, The beamformee 1 corresponding to the station information 1 in the NDPA transmits a VCBF to the beamformer, wherein the VCBF comprises a beamforming weight with a granularity which corresponds to a weight feedback granularity requirement value.

Wherein, a format of the VCBF is shown in table 8:

**Table 8**

| Information | Note |
|---|---|
| Type | |
| VHT Function | |
| VHT MIMO Control | |
| VHT Compressed Beamforming Report | |
| Multi-user Display Beamforming Report | |

A format of the VHT MIMO control field in the VCBF is shown in table 9:

**Table 9**

| Information | Size (bit) | Note |
|---|---|---|
| Nc index | 3 | |
| Nr index | 3 | |
| Channel width | 2 | |
| Grouping | 2 | |
| Codebook information | 1 | |
| Feedback Type | 1 | |
| Remaining Segments | 3 | |
| First Segments | 1 | |
| Reserved | 4 | |
| Sounding Sequence | 6 | |

The Grouping in the VHT MIMO control field indicates the granularity of the weight feedback.

S503, the beamformer transmits a BFRP to request a beamformee 2 corresponding to the station information 2 to transmit a VCBF to the beamformer.

Wherein, a structure of the BRPF is shown in table 10:

**Table 10**

| Information | Size (byte) | Note |
|---|---|---|
| Frame Control | 2 | |
| Duration | 2 | |
| RA | 6 | |
| TA | 6 | |
| Fragment Retransmission Bitmap | 1 | |
| FCS | 4 | |

S504, the beamformee 2 corresponding to the station information 2 transmits a VCBF to the beamformer, wherein the VCBF comprises a beamforming weight with a granularity which corresponds to the weight feedback granularity requirement value.

The embodiment of the present invention provides a method for setting weight feedback granularities, wherein, the beamformees receive a null data packet announcement (NDPA) frame transmitted by a beamformer, which comprising weight feedback granularity requirement values , wherein the weight feedback granularity requirement values may be set before or after a sounding sequence in the NDPA field, or in a reserved part of the sounding sequence field, and may also be set in any part or a reserved field of station information fields in the NDPA field, and the beamformees transmit very high throughput compressed beamforming (VCBF) frames to the beamformer after receiving a null data packet (NDP) frame transmitted by the beamformer and measuring a beamforming weights with granularities which correspond to the weight feedback granularity requirement values, wherein the very high throughput compressed beamforming (VCBF) frames comprises the beamforming weights which correspond to the weight feedback granularity requirement values. Thus, the beamformer is enabled to control the weight feedback granularities, thereby better managing users.

### Embodiment III

Provided in an embodiment of the present invention is a method for setting a weight feedback granularity. The embodiment of the method is applied to a multi-user scenario. As shown in Fig. 6, a specific embodiment comprises the following steps:
S600, a beamformer transmits a NDPA, and beamformees receive the NDPA.
S601, after an interval of a SIFS, the beamformer transmits a NDP, and the beamformees receive the NDP and measure beamforming weights.

In addition, a structure of the NDPA is shown in table 1 or shown as the update structure of the NDPA added with the weight feedback granularity requirement value field in embodiment II.

In the station information of the NDPA, the station information 1 corresponds to the beamformee 1. A weight feedback granularity of the beamformee 1 is directly fed back to the beamformer through a VCBF, as illustrated in step S602.

S602, the beamformee 1 transmits the VCBF to the beamformer.

If the NDPA comprises a weight feedback granularity requirement value, the beamformee 1 feeds back a beamforming weight with a granularity according to the weight feedback granularity requirement value; if the NDPA does not comprises a weight feedback granularity requirement value, but previous capability interaction information comprises a weight feedback granularity requirement value, the beamformee 1 feeds back the beamforming weight with a granularity according to the weight feedback granularity requirement value in the capability interaction information; if neither the NDPA nor the previous capability interaction information comprises a weight feedback granularity requirement value, the beamformee 1 determines a weight feedback granularity by itself or feeds back a beamforming weight by using a minimum supported weight feedback granularity by default.

In station information of the NDPA, the station information 2 after the station information 1 corresponds to the beamformee 2. The beamformee 2 transmits a VCBF comprising a weight feedback granularity requirement value to the beamformer, after receiving a BFRP comprising a weight feedback granularity requirement value transmitted by the beamformer, as illustrated in step 603.

S603, the beamformer transmits a BFRP comprising a weight feedback granularity requirement value to request the beamformee 2 to transmit a VCBF to the beamformer, wherein the VCBF comprising a beamforming weight with a granularity according to the weight feedback granularity requirement value.

In a multi-user scenario, the station information of the NDPA comprises at least two pieces of station information. Station information 1 and station information 2 are taken as examples for description in the embodiment of the present invention, but not limited to this.

The weight feedback granularity requirement value may be set in a newly added weight feedback granularity request field of the VCBF, as shown in table 11:

**Table 11**

| Information | Size (byte) | Note |
|---|---|---|
| Frame Control | 2 | |
| Duration | 2 | |
| RA | 6 | |
| TA | 6 | |
| Fragment Retransmission Bitmap | 1 | |
| Weight Feedback Granularity Request Field | 1 | a newly added weight feedback granularity request field |
| FCS | 4 | |

The newly added weight feedback granularity request field may be set before the fragment retransmission bitmap, and may also be set after the fragment retransmission bitmap.

A structure of the weight feedback granularity request field is shown in table 6.

The newly added weight feedback granularity request field is totally 8 bits, wherein any 2 bits may be used for indicating the weight feedback granularity requirement value.

For example, the weight feedback granularity requirement value field mentioned above may be set as 2 bits, and a corresponding value range is {0, 1, 2, 3}, wherein three values correspond to the weight feedback granularities 1, 2 and 4 respectively, and a remaining value is reserved or indicates no requirement for the feedback weight granularity of the beamformee, e.g., 0 indicates that the feedback weight granularity is 1, 1 indicates that the feedback weight granularity is 2, 2 indicates that the feedback weight granularity is 4, and 3 is reserved or indicates no requirement for the feedback weight granularity of the beamformee.

S604, the beamformee 2 corresponding to the station information 2 transmits a VCBF to the beamformer, wherein the VCBF comprises a beamforming weight with the granularity which corresponds to the weight feedback granularity requirement value .

In addition, in the steps S602 and S604, the weight feedback granularity requirement values comprised in the VCBFs finally transmitted by the beamformee 1 and the beamformee 2 are determined according to the following criteria: if the BFRP comprises a weight feedback granularity requirement value (the weight feedback granularity is 1 or 2 or 4), it is determined by the weight feedback granularity requirement value comprised in the BFRP; if the BFRP does not comprise a weight feedback granularity requirement value and the NDPA comprises a weight feedback granularity requirement value (the weight feedback granularity is 1 or 2 or 4), it is determined by the weight feedback granularity requirement value comprised in the NDPA; if neither the NDPA nor the BFRP comprises a weight feedback granularity requirement value, the beamformees determine a weight feedback granularity by themselves or feed back beamforming weights by using a minimum supported weight feedback granularity by default.

In this embodiment, if both the NDPA and the BFRP comprise a weight feedback granularity requirement value, the weight feedback granularity requirement value comprised in the NDPA is used by the beamformee 1, and the weight feedback granularity requirement value comprised in the BFRP is used by the beamformee 2. A specific implementation of the former is referred to embodiment II, which is not described redundantly in the embodiment of the present invention.

The embodiment of the present invention provides a method for setting a weight feedback granularity, wherein, the beamformee receives a beamforming report poll frame (BRPF) comprising a weight feedback granularity requirement value transmitted by the beamformer, and transmits a very high throughput compressed beamforming (VCBF) frame to the beamformer after receiving the BRPF, wherein the very high throughput compressed beamforming (VCBF) frame comprises a beamforming weight with a granularity which correspond to the weight feedback granularity requirement value. Thus, the beamformer is enabled to control the weight feedback granularity, thereby better managing users.

### Embodiment IV

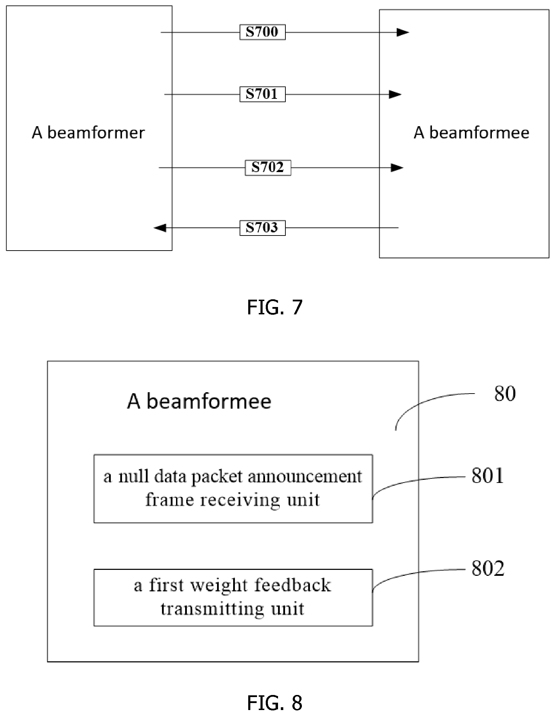

Provided in an embodiment of the present invention is a method for setting a weight feedback granularity. As shown in Fig. 7, a specific embodiment comprises the following steps:
S700, a beamformer transmits capability interaction information comprising a weight feedback granularity requirement value to a beamformee.

Wherein, a VCIF in the capability interaction information is shown in table 12:

**Table 12**

| Information | Size (bit) | Note |
|---|---|---|
| Maximum MPDU length | 2 | |
| Supported Channel Width SET | 2 | |
| LDPC Coding Capability | 1 | |
| Short G1 for 80MHz | 1 | |
| Short G1 for 160 and 80+80MHz | 1 | |
| Tx STBC | 1 | |
| Rx STBC | 3 | |
| SU Beamformer Capable | 1 | |
| SU Beamformee Capable | 1 | |
| Compressed Steering Number of Beamformer Antennas Supported | 3 | |
| Number Of Sounding Dimensions | 3 | |
| MU Beamformer Capable | 1 | |
| MU Beamformere Capable | 1 | |
| VHT TXOP PS | 1 | |
| +HTC-VHT Capable | 1 | |
| Maximum A-MPDU Length Exponent | 3 | |
| VHT Link Adaptation Capable | 2 | |
| Reserved Field | 4 | |

The weight feedback granularity requirement value may be set in a newly added weight feedback granularity request field in the VCIF of the capability interaction information, as shown in table 13.

**Table 13**

| Information | Size (bit) | Note |
|---|---|---|
| Maximum MPDU length | 2 | |
| Supported Channel Width SET | 2 | |
| LDPC Coding Capability | 1 | |
| Short G1 for 80MHz | 1 | |
| Short G1 for 160 and 80+80MHz | 1 | |
| Tx STBC | 1 | |
| Rx STBC | 3 | |
| SU Beamformer Capable | 1 | |
| SU Beamformee Capable | 1 | |
| Compressed Steering Number of Beamformer Antennas Supported | 3 | |
| Number Of Sounding Dimensions | 3 | |
| MU Beamformer Capable | 1 | |
| MU Beamformere Capable | 1 | |
| VHT TXOP PS | 1 | |
| +HTC-VHT Capable | 1 | |
| Maximum A-MPDU | 3 | |
| Length Exponent | | |
| VHT Link Adaptation Capable | 2 | |
| Reserved Field | 4 | |
| Weight Feedback Granularity request Field | 8 | a newly added weight feedback granularity request field |

Wherein, a newly added weight feedback granularity request field may be set at any position in the VCIF field.

A structure of the weight feedback granularity request field is shown in table 6.

The newly added weight feedback granularity request field may be totally 8 bits, wherein any 2 bits may be used for indicating the weight feedback granularity requirement value.

The weight feedback granularity requirement value may also be set in the reserved information field of the VCIF, and any 2 bits in the field is taken for indicating the weight feedback granularity requirement value, as shown in table 14:

**Table 14**

| Information | Size (bit) | Note |
|---|---|---|
| Maximum MPDU length | 2 | |
| Supported Channel Width SET | 2 | |
| LDPC Coding Capability | 1 | |
| Short G1 for 80MHz | 1 | |
| Short G1 for 160 and 80+80MHz | 1 | |
| Tx STBC | 1 | |
| Rx STBC | 3 | |
| SU Beamformer Capable | 1 | |
| SU Beamformee Capable | 1 | |
| Compressed Steering Number of Beamformer Antennas Supported | 3 | |
| Number Of Sounding Dimensions | 3 | |
| MU Beamformer Capable | 1 | |
| MU Beamformere Capable | 1 | |
| VHT TXOP PS | 1 | |
| +HTC-VHT Capable | 1 | |
| Maximum A-MPDU Length Exponent | 3 | |
| VHT Link Adaptation Capable | 2 | |
| Weight Feedback Granularity Requirement Value | 4 | wherein, any 2 bits of the reserved field indicates the weight feedback granularity requirement value |

For example, the weight feedback granularity requirement value field mentioned above may be set as 2 bits, and a corresponding value range is {0, 1, 2, 3}, wherein three values correspond to the weight feedback granularities 1, 2 and 4 respectively, and a remaining value is reserved or indicates no requirement for the feedback weight granularity of the beamformee, e.g., 0 indicates that the feedback weight granularity is 1, 1 indicates that the feedback weight granularity is 2, 2 indicates the feedback weight granularity is 4, and 3 is reserved or indicates no requirement for the feedback weight granularity of the beamformee.

S701, the beamformer transmits a NDPA, and the beamformee receives the NDPA.

S702, after an interval of a SIFS, the beamformer transmits a NDP, and the beamformee receives the NDP and measures a beamforming weight.

S703, the beamformee transmits a VCBF to the beamformer, wherein the VCBF comprises the beamforming weight with a granularity according to the feedback weight granularity requirement value.

In addition, in the step S703, the weight feedback granularity requirement value comprised in the VCBF finally transmitted by the beamformee may also be determined according to the following criteria: if a BFRP comprises a weight feedback granularity requirement value (the weight feedback granularity is 1 or 2 or 4), it is determined according to the weight feedback granularity requirement value comprised in the BFRP; if the BFRP does not comprise a weight feedback granularity requirement value and the NDPA comprises a weight feedback granularity requirement value (the weight feedback granularity is 1 or 2 or 4), it is determined according to the weight feedback granularity requirement value comprised in the NDPA; if neither the NDPA nor the BFRP comprises a weight feedback granularity requirement value and the VCIF in the capability interaction information comprises a weight feedback granularity requirement value (the weight feedback granularity is 1 or 2 or 4), it is determined according to the weight feedback granularity requirement value comprised in the VCIF; if none of the NDPA, the BFRP or the VCIF comprises a weight feedback granularity requirement value, the beamformee determines a weight feedback granularity by itself or feeds back a beamforming weight by using a minimum supported weight feedback granularity by default.

In this embodiment, if both the NDPA and the VCIF in the capability interaction information comprise a weight feedback granularity requirement value, the weight feedback granularity requirement value comprised in the NDPA is used by the beamformee. A specific implementation is referred to embodiment II, which is not described redundantly in the embodiment of the present invention.

The embodiment of the present invention provides a method for setting a weight feedback granularity, wherein, the beamformee receives capability interaction information comprising the weight feedback granularity requirement value transmitted by the beamformer, and transmits a very high throughput compressed beamforming (VCBF) frame to the beamformer after receiving a null data packet (NDP) frame transmitted by the beamformer and measuring a beamforming weight with a granularity according to the weight feedback granularity requirement value, wherein the very high throughput compressed beamforming (VCBF) frame comprises the beamforming weight with the granularity which corresponds to the weight feedback granularity requirement value. Thus, the beamformer is enabled to control the weight feedback granularity, thereby better managing users.

### Embodiment V

Provided in an embodiment of the present invention is a beamformee device 80, as shown in Fig. 8, comprising:
a null data packet announcement frame receiving unit 801, configured to receive a null data packet announcement (NDPA) frame comprising a weight feedback granularity requirement value transmitted by a beamformer;
a first weight feedback transmitting unit 802, configured to transmit a very high throughput compressed beamforming (VCBF) frame to the beamformer after receiving a null data packet (NDP) frame transmitted by the beamformer and measuring a beamforming weight with a granularity according to the weight feedback granularity requirement value, wherein the very high throughput compressed beamforming (VCBF) frame comprising the beamforming weight with the granularity which corresponds to the weight feedback granularity requirement value.

In addition, the weight feedback granularity requirement value is set in a reserved information field in a sounding sequence field of the NDPA, or set in a newly added weight feedback granularity request field of the NDPA, or set in a reserved information field of station information of the NDPA, or set in a newly added weight feedback granularity request field of the station information.

The embodiment of the present invention provides a beamformee device. The device receives a null data packet announcement (NDPA) frame comprising a weight feedback granularity requirement value transmitted by the beamformer,and transmits a very high throughput compressed beamforming (VCBF) frame to the beamformer after receiving a null data packet (NDP) frame transmitted by the beamformer and measuring a beamforming weight with a granularity according to the weight feedback granularity requirement value, wherein the very high throughput compressed beamforming (VCBF) frame comprises the beamforming weight with the granularity which corresponds to the weight feedback granularity requirement value. Thus, the beamformer is enabled to control the weight feedback granularity, thereby better managing users.

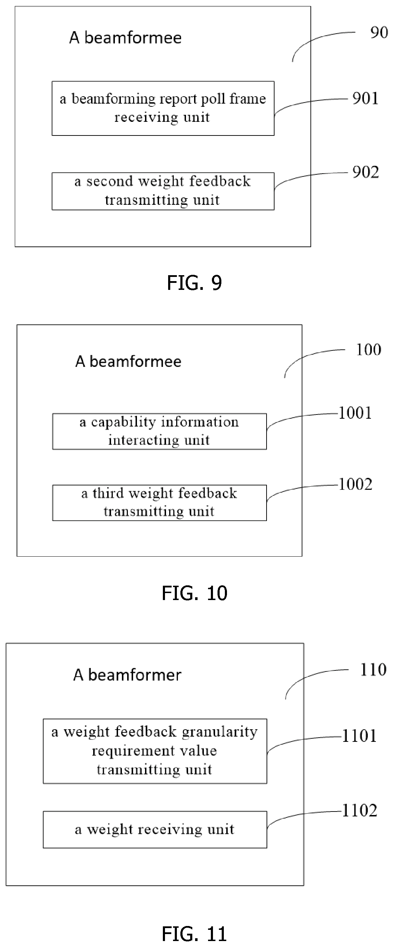

Provided in an embodiment of the present invention is a beamformee device 90, as shown in Fig. 9, comprising:
a beamforming report poll frame receiving unit 901, configured to receive a beamforming report poll frame (BRPF) comprising a weight feedback granularity requirement value transmitted by a beamformer;
a second weight feedback transmitting unit 902, configured to transmit a very high throughput compressed beamforming (VCBF) frame to the beamformer, wherein the very high throughput compressed beamforming (VCBF) frame comprises a beamforming weight with a granularity according to the weight feedback granularity requirement value.

In addition, the weight feedback granularity requirement value is set in the BRPF.

The embodiment of the present invention provides a beamformee device. The device receives a beamforming report poll frame (BRPF) comprising the weight feedback granularity requirement value transmitted by the beamformer, and transmits a very high throughput compressed beamforming (VCBF) frame to the beamformer, wherein the very high throughput compressed beamforming (VCBF) frame comprises the beamforming weight with a granularity which corresponds to the weight feedback granularity requirement value . Thus, the beamformer is enabled to control the weight feedback granularity, thereby better managing users.

Provided in an embodiment of the present invention is a beamformee device 100, as shown in Fig. 10, comprising:
a capability information interacting unit 1001, configured to receive capability interaction information comprising a weight feedback granularity requirement value transmitted by a beamformer;
a third weight feedback transmitting unit 1002, configured to transmit a very high throughput compressed beamforming (VCBF) frame to the beamformer after receiving a null data packet (NDP) frame transmitted by the beamformer and measure a beamforming weight with the granularity according to the weight feedback granularity requirement value, wherein the very high throughput compressed beamforming (VCBF) frame comprises the beamforming weight with the granularity which corresponds to the weight feedback granularity requirement value .

In addition, the weight feedback granularity requirement value may be set in a newly added weight feedback granularity request field in very high throughput capability information (VCIF) of the capability interaction information, and may also be set in a reserved information field in the VCIF.

The embodiment of the present invention provides a beamformee device. The device receives capability interaction information comprising a weight feedback granularity requirement value transmitted by a beamformer, and transmits a very high throughput compressed beamforming (VCBF) frame to the beamformer after receiving a null data packet (NDP) frame transmitted by the beamformer and measuring a beamforming weight with a granularity according to the weight feedback granularity requirement value, wherein the very high throughput compressed beamforming (VCBF) frame comprises the beamforming weight with the granularity which corresponds to the weight feedback granularity requirement value. Thus, the beamformer is enabled to control the weight feedback granularity, thereby better managing users.

Provided in an embodiment of the present invention is a beamformer device 110, as shown in Fig. 11, comprising:
a weight feedback granularity requirement value transmitting unit 1101, configured to transmit a weight feedback granularity requirement value to a beamformee;
a weight receiving unit 1102, configured to receive a beamforming weight returned by the beamformee.

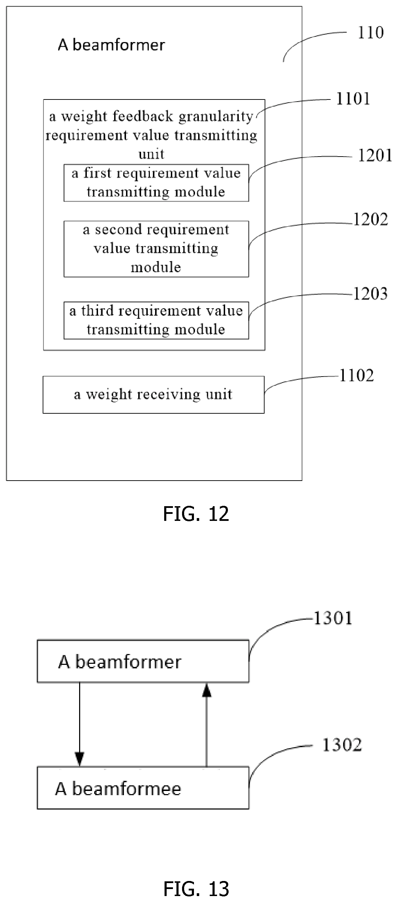

Further, the weight feedback granularity requirement value transmitting unit 1101, as shown in Fig. 12, further comprises:
a first requirement value transmitting module 1201, configured to transmit the weight feedback granularity requirement value to the beamformee through a null data packet announcement (NDPA) frame;
a second requirement value transmitting module 1202, configured to transmit the weight feedback granularity requirement value to the beamformee through a beamforming report poll frame (BRPF);
a third requirement value transmitting module 1203, configured to transmit the weight feedback granularity requirement value to the beamformee through very high throughput capability information (VCIF).

The embodiment of the present invention provides a beamformer device. The device transmits a weight feedback granularity requirement value to a beamformee, and receives a beamforming weight returned by the beamformee. Thus, the beamformer is enabled to control the weight feedback granularity, thereby better managing users.

It should be noted that, in actual application, the beamformee device may be a base station, and the beamformer device may be a user terminal.

Also provided in an embodiment of the present invention is a system for setting a weight feedback granularity, as shown in Fig. 13, comprising:
a beamformer device 1301, configured to transmit a weight feedback granularity requirement value to a beamformee through a null data packet announcement (NDPA) frame; or
to transmit a weight feedback granularity requirement value to the beamformee through a beamforming report poll frame (BRPF); or
to transmit a weight feedback granularity requirement value to the beamformee through very high throughput capability information (VCIF);
a beamformee device 1302, configured to receive the weight feedback granularity requirement value transmitted by the beamformer, and to return a beamforming weight using the weight feedback granularity requirement value as a granularity through a very high throughput compressed beamforming (VCBF) frame;
wherein the beamformer is further configured to receive the beamforming weight returned by the beamformee.

The embodiment of the present invention provides a system for setting a weight feedback granularity. A beamformer device transmits a weight feedback granularity requirement value to a beamformee through a null data packet announcement (NDPA) frame or a beamforming report poll frame (BRPF) or very high throughput capability information (VCIF), and receives a beamforming weight returned by the beamformee device. Therefore, the beamformer is enabled to control the weight feedback granularity, thereby better managing users.

The foregoing descriptions are merely specific embodiments of the present invention, rather than limiting the protection scope of the present invention. Any change or substitution that is easily conceived for those skilled in the art within the technical scope disclosed by the embodiments of the present invention shall fall into the protection scope of the present invention. Therefore, the protection scope of the present invention shall be defined by the claims.

Further embodiments of the present invention are provided in the following. It should be noted that the numbering used in the following section does not necessarily need to comply with the numbering used in the previous sections.

Embodiment 1. A method comprising:
receiving a null data packet announcement (NDPA) frame comprising a weight feedback granularity requirement value transmitted by a beamformer;
receiving a null data packet (NDP) frame transmitted by the beamformer, measuring a beamforming weight with a granularity according to the weight feedback granularity requirement value, and transmitting a very high throughput compressed beamforming (VCBF) frame to the beamformer, wherein the very high throughput compressed beamforming (VCBF) frame comprises the beamforming weight using the weight feedback granularity requirement value as the granularity.

Embodiment2. The method according to Embodiment 1, wherein the weight feedback granularity requirement value is set in a reserved information field in a sounding sequence field of the NDPA; or
the weight feedback granularity requirement value is set in a newly added weight feedback granularity request field in the NDPA; or
the weight feedback granularity requirement value is set in a reserved information field in station information of the NDPA; or
the weight feedback granularity requirement value is set in a newly added weight feedback granularity request field in the station information.

Embodiment3. A method for setting a weight feedback granularity, comprising:
receiving a beamforming report poll frame (BRPF) comprising a weight feedback granularity requirement value transmitted by a beamformer;
transmitting a very high throughput compressed beamforming (VCBF) frame to the beamformer, wherein the very high throughput compressed beamforming (VCBF) frame comprises a beamforming weight with a granularity which corresponds to the weight feedback granularity requirement value.

Embodiment4. The method according to embodiment 3, wherein the weight feedback granularity requirement value is set in the BRPF.

Embodiment5. A method for setting a weight feedback granularity, comprising:
receiving capability interaction information comprising a weight feedback granularity requirement value transmitted by a beamformer;
receiving a null data packet (NDP) frame transmitted by the beamformer, measuring a beamforming weight by using the weight feedback granularity requirement value as a granularity, and transmitting a very high throughput compressed beamforming (VCBF) frame to the beamformer, wherein the very high throughput compressed beamforming (VCBF) frame comprises the beamforming weight with a granularity which corresponds to the weight feedback granularity requirement value.

Embodiment6. The method according to embodiment 5, wherein the weight feedback granularity requirement value is set in a newly added weight feedback granularity request field in very high throughput capability information (VCIF) of the capability interaction information; or
the weight feedback granularity requirement value is set in a reserved information field in the VCIF.

Embodiment7. A method for setting a weight feedback granularity, comprising:
transmitting a weight feedback granularity requirement value to a beamformee;
receiving a beamforming weight with a granularity which corresponds to the weight feedback granularity requirement value, which is returned by the beamformee.

Embodiment8. The method according to embodiment 7, wherein the transmitting a weight feedback granularity requirement value to a beamformee comprises:
transmitting the weight feedback granularity requirement value to the beamformee through a null data packet announcement (NDPA) frame; or
transmitting the weight feedback granularity requirement value to the beamformee through a beamforming report poll frame (BRPF); or
transmitting the weight feedback granularity requirement value to the beamformee through very high throughput capability information (VCIF).

Embodiment9. A beamformee device, comprising:
a null data packet announcement frame receiving unit, configured to receive a null data packet announcement (NDPA) frame comprising a weight feedback granularity requirement value transmitted by a beamformer;
a first weight feedback transmitting unit, configured to transmit a very high throughput compressed beamforming (VCBF) frame to the beamformer, after receiving a null data packet (NDP) frame transmitted by the beamformer and measuring a beamforming weight with a granularity according to the weight feedback granularity requirement value, wherein the very high throughput compressed beamforming (VCBF) frame comprises the beamforming weightwith the granularity which corresponds to the weight feedback granularity requirement value.

Embodiment10. The beamformee device according to embodiment 9, wherein the weight feedback granularity requirement value is set in a reserved information field in a sounding sequence field of the NDPA; or
the weight feedback granularity requirement value is set in a newly added weight feedback granularity request field in the NDPA; or
the weight feedback granularity requirement value is set in a reserved information field in station information of the NDPA; or
the weight feedback granularity requirement value is set in a newly added weight feedback granularity request field in the station information.

Embodiment11. A beamformee device, comprising:
a beamforming report poll frame receiving unit, configured to receive a beamforming report poll frame (BRPF) comprising a weight feedback granularity requirement value transmitted by a beamformer;
a second weight feedback transmitting unit, configured to transmit a very high throughput compressed beamforming (VCBF) frame to the beamformer, wherein the very high throughput compressed beamforming (VCBF) frame comprises a beamforming weight with the granularity which corresponds to the weight feedback granularity requirement value.

Embodiment12. The beamformee device according to embodiment 11, wherein the weight feedback granularity requirement value is set in the BRPF.

Embodiment13. A beamformee device, comprising:
a capability information interacting unit, configured to receive capability interaction information comprising a weight feedback granularity requirement value transmitted by a beamformer;
a third weight feedback transmitting unit, configured to transmit a very high throughput compressed beamforming (VCBF) frame to the beamformer, after receiving a null data packet (NDP) frame transmitted by the beamformer and measuring a beamforming weight by using the weight feedback granularity requirement value as a granularity, wherein the very high throughput compressed beamforming (VCBF) frame comprises the beamforming weight using the weight feedback granularity requirement value as the granularity.

Embodiment14. The beamformee device according to embodiment 13, wherein the weight feedback granularity requirement value is set in a newly added weight feedback granularity request field in very high throughput capability information (VCIF) of the capability interaction information; or
the weight feedback granularity requirement value is set in a reserved information field in the VCIF.

Embodiment15. A beamformer device, comprising:
a weight feedback granularity requirement value transmitting unit, configured to transmit a weight feedback granularity requirement value to a beamformee;
a weight receiving unit, configured to receive a beamforming weight returned by the beamformee.

Embodiment16. The beamformer device according to embodiment 15, the weight feedback granularity requirement value transmitting unit further comprises:
a first requirement value transmitting module, configured to transmit the weight feedback granularity requirement value to the beamformee through a null data packet announcement (NDPA) frame;
a second requirement value transmitting module, configured to transmit the weight feedback granularity requirement value to the beamformee through a beamforming report poll frame (BRPF);
a third requirement value transmitting module, configured to transmit the weight feedback granularity requirement value to the beamformee through very high throughput capability information (VCIF).

Embodiment17. A system for setting a weight feedback granularity, comprising:a beamformer device, configured to transmit a weight feedback granularity requirement value to a beamformee through a null data packet announcement (NDPA) frame; or
to transmit a weight feedback granularity requirement value to a beamformee through a beamforming report poll frame (BRPF); or
to transmit a weight feedback granularity requirement value to a beamformee through very high throughput capability information (VCIF);
a beamformee device, configured to receive the weight feedback granularity requirement value transmitted by the beamformer, and to return a beamforming weight using the weight feedback granularity requirement value as a granularity through a very high throughput compressed beamforming (VCBF) frame;
wherein the beamformer device is further configured to receive the beamforming weight returned by the beamformee device.

## Claims

1. A method for beamforming, comprising
transmitting (S10, S500), by a beamformer, a null data packet announcement, NDPA, frame, wherein the NDPA frame comprises at least two station information fields corresponding to at least two beamformees respectively, each of the station information fields corresponds to a respective beamformee of the at least two beamformees;
transmitting (S11, S501), by the beamformer, a null data packet, NDP, frame after an interval of a short inter frame space, SIFS, following the NDPA frame;
receiving (S11, S502, S504), by the beamformer, beamforming frames from the at least two beamformees;
wherein
each of the station information fields in the NDPA frame further comprise a weight feedback granularity request field specifying a weight feedback granularity requirement value for the corresponding beamformee;
wherein each of the received beamforming frames comprises a beamforming weight with a granularity which corresponds to the respective weight feedback granularity requirement value specified in the NDPA frame for the beamformee.

2. The method according to claim 1, wherein the at least two station information fields of the NDPA frame comprise a first station information field, the first station information field comprise information for a first beamformee within the at least two beamformees; wherein the receiving beamforming frames comprises:
receiving (S502), by the beamformer, a first beamforming frame from the first beamformee within the at least two beamformees corresponding to the first station information field, wherein the first beamforming frame comprises a beamforming weight with a granularity which corresponds to a weight feedback granularity requirement value in the first station information field of the NDPA frame.

3. The method according to claim 1, wherein the at least two station information fields of the NDPA frame comprise a second station information field, the second station information field comprises information for a second beamformee within the at least two beamformees, wherein the receiving beamforming frames comprises:
transmitting (S503), by the beamformer, a beamforming report poll, BFRP, frame to request the second beamformee corresponding to the second station information field to transmit a beamforming frame to the beamformer; and
receiving (S504), by the beamformer, the beamforming frame from the second beamformee corresponding to the second station information field, wherein the beamforming frame comprises a beamforming weight with a granularity which corresponds to a weight feedback granularity requirement value in the second station information field of the NDPA frame.

4. The method according to claim 1, 2, or 3, wherein 2 bits are used for indicating a weight feedback granularity requirement value field within the weight feedback granularity request field of 8 bits.

5. The method according to any one of claims 1 to 4,
wherein each of the station information fields comprises information of an association identifier, a feedback type and a Nc index for a corresponding beamformee, wherein the feedback type indicates a single user type or a multiple users type, the Nc index indicates a required feedback dimension if the multiple users type is indicated.

6. A method for beamforming, comprising:
receiving (S10, S500), by a beamformee, a null data packet announcement, NDPA, frame, wherein the NDPA frame comprises at least two station information fields corresponding to at least two beamformees respectively, wherein the beamformee which received the NDPA frame is one of the at least two beamformees, each of the station information fields corresponds to a respective beamformee of the at least two beamformees;
receiving (S11, S501), by the beamformee, a null data packet, NDP, frame after an interval of a short inter frame space, SIFS, following the NDPA frame;
transmitting (S11, S502,S504), by the beamformee, a beamforming frame after the NDP frame;
wherein
each of the station information fields in the NDPA frame further comprises a weight feedback granularity request field specifying a weight feedback granularity requirement value for the corresponding beamformee;
wherein the transmitted beamforming frame comprises a beamforming weight with a granularity which corresponds to the weight feedback granularity requirement value specified in the NDPA frame for the beamformee.

7. The method according to claim 6, wherein the at least two station information fields comprise a first station information field, the beamformee which received the NPPA frame is the first beamformee in the first station information field, wherein the transmitting a beamforming frame comprises:
transmitting (S502), by the first beamformee, a first beamforming frame based on the first station information field.

8. The method according to claim 6,
wherein the at least two station information fields comprise a second station information field, the beamformee which received the NDPA frame is the second beamformee in the second station information field, wherein the transmitting a beamforming frame comprises:
receiving (S503), by the second beamformee, a beamforming report poll, BFRP, frame to request the second beamformee to transmit a beamforming frame and
transmitting(S504), by the second beamformee, a second beamforming frame based on the second station information field and the BFRP frame.

9. The method according to claim 6, 7 or 8, wherein 2 bits are used for indicating a weight feedback granularity requirement value field within the weight feedback granularity request field of 8 bits.

10. The method according to any one of claims 6 to 9,
wherein each of the station information fields comprises information of an association identifier, a feedback type and a Nc index for the corresponding beamformee, wherein the feedback type indicates a single user type or a multiple users type, the Nc index indicates a required feedback dimension if the multiple users type is indicated.

11. A beamformer, comprising one or more modules configured to execute any of the methods of claims 1-5.

12. A beamformee, comprising one or more modules configured to execute any one of the method of claim 6-10.

13. A computer program product comprising instructions which, when executed by a computer, cause the computer to carry out the method according to any one of claims 1 to 10.

14. A computer readable storage medium, wherein a program is stored in the readable storage medium, and when the program is executed, the method steps according to any one of claims 1 to 10 are performed.

15. A system comprising the beamformer according to claim 11 and the beamformee according to claim 12.
